# EUROPEAN PATENT APPLICATION

(11) **EP 4 589 873 A1**
(43) Date of publication of application: **23.07.2025**
(21) Application number: 22966874.4
(22) Date of filing: 30.11.2022
(51) Int. Cl.: H04L 1/18

(54) **HARQ PROCESS MANAGEMENT METHOD, APPARATUS AND SYSTEM**

(71) Applicant: Huawei Technologies Co., Ltd., Shenzhen, Guangdong 518129 (CN)
(72) Inventor: ZHOU, Mingyue, Shenzhen, Guangdong 518129 (CN); WANG, Lei, Shenzhen, Guangdong 518129 (CN); LUO, Hejia, Shenzhen, Guangdong 518129 (CN)
(74) Representative: Pfenning, Meinig & Partner mbB
(86) International application number: PCT/CN2022/135712
(87) International publication number: WO 2024/113283

(57) **Abstract**

This application provides a HARQ process management method, an apparatus, and a system, and is applied to the field of communication technologies. The communication method provided in this application includes: determining, based on usage of a HARQ resource in a first HARQ resource pool, that first indication information needs to be sent, where the first HARQ resource pool corresponds to a first grant free GF resource group; and then sending the first indication information to a first terminal device, where the first indication information indicates to suspend sending a new HARQ process, and the first terminal device is a terminal device configured with at least one GF resource in the first GF resource group. This application provides a solution of efficiently managing a HARQ process, to alleviate resource shortage and rapid resource expansion on a network device side.

## Description

### TECHNICAL FIELD

This application relates to the field of communication technologies, and in particular, to a hybrid automatic repeat request (hybrid automatic repeat request, HARQ) process management method, an apparatus, and a system.

### BACKGROUND

According to a grant free (grant free, GF) transmission protocol in a new radio (new radio, NR) system, before performing uplink transmission, a terminal device does not need to monitor a dynamic grant of a network device to obtain a time-frequency resource and a transmission parameter that are used for sending data, but may send the data to the network device by using a preconfigured time-frequency resource (which may be referred to as a GF resource) and a preconfigured transmission parameter. Further, by combining a grant free mechanism with a HARQ protocol, the terminal device may send a HARQ process on the GF resource to transmit a data packet, monitor feedback of the network device in a corresponding monitoring window, and determine, based on a feedback result, whether to retransmit the data packet. Different HARQ processes sent by the terminal device may be distinguished by using identities (identity document, ID) of the HARQ processes.

For different HARQ processes sent by the terminal device, different memory areas need to be created on the network device side, to respectively store control information and data related to the HARQ processes. According to an existing related discussion about a HARQ protocol in a non-terrestrial network (non-terrestrial network, NTN), a total quantity of HARQ processes of a single terminal device may reach 32. In other words, the network device needs to create a maximum of 32 corresponding buffer resources for the single terminal device to store the control information and the data related to the corresponding HARQ processes. However, because a radius of a cell of the NTN network is large (at a hundred-kilometer level), and a quantity of potential users of the NTN network is far greater than that of a conventional terrestrial network, a requirement for HARQ buffer resources on the network device side increases explosively, resulting in resource shortage on the network device side. In addition, in an application scenario in which the uplink transmission is performed according to the grant free protocol, a resource used by the terminal device to send the HARQ process is the preconfigured GF resource. In other words, the network device cannot control the HARQ process by dynamically scheduling the resource used by the terminal device to send the HARQ process. Consequently, the HARQ buffer resources on the network device side in the NTN network may increase rapidly in a short period of time, which affects memory on the network device side.

### SUMMARY

Embodiments of this application provide a HARQ process management method, an apparatus, and a system, to efficiently manage a HARQ process, and alleviate resource shortage and a trend of rapid resource expansion on a network device side.

To achieve the foregoing objectives, the following technical solutions are used in embodiments of this application.

According to a first aspect, a HARQ process management method is provided. The method may be performed by a network device, may be performed by a component (for example, a processor, a chip, or a chip system) of the network device, or may be implemented by a logic module or software that can implement all or some functions of the network device. The following describes the method by using an example in which an execution body is the network device. The method includes: The network device determines, based on usage of a HARQ resource in a first HARQ resource pool, that first indication information needs to be sent, where the first HARQ resource pool corresponds to a first grant free GF resource group. The network device sends the first indication information to a first terminal device, where the first indication information indicates to suspend sending a new HARQ process, and the first terminal device is a terminal device configured with at least one GF resource in the first GF resource group.

Based on the HARQ process management method provided in this embodiment of this application, the network device may actively determine, based on the usage of the resource in the first HARQ resource pool, whether to deliver the first indication information, so that the first terminal device may suspend sending the HARQ process under an indication of the first indication information. In this way, a trend of memory expansion on a network side is restrained in time, pressure of HARQ resource shortage in the HARQ resource pool is relieved, and there is space for the network device to process expansion of a HARQ buffer resource. It can be learned that, according to the HARQ process management method provided in this embodiment of this application, a HARQ process may be efficiently managed, and overall running efficiency of a communication system may be improved.

With reference to the first aspect, in a possible design, the first indication information includes first duration, and the first duration is running duration of a first timer. That the first indication information indicates to suspend sending a new HARQ process includes: The first indication information indicates to suspend sending the new HARQ process during running of the first timer. Based on this solution, the first indication information may indicate suspension duration.

With reference to the first aspect, in a possible design, the first indication information further includes second duration, and the second duration is a maximum value of random extended duration for suspending sending the new HARQ process after the first timer expires and before sending of the new HARQ process is restarted.

In a solution in which the first indication information indicates, by using the second duration, the first terminal device to perform random backoff, the following scenario is avoided: In a short period of time after the first duration ends, a plurality of terminal devices simultaneously perform sending in a contention-based manner by using a GF resource. In this way, rapid expansion of a memory resource on the network side in a short period of time after the suspension ends is avoided. It can be learned that in this solution, a transmission success rate of the terminal device is improved through the random backoff while the memory resource on the network side is protected.

With reference to the first aspect, in a possible design, the method further includes: The network device sends second indication information to the first terminal device, where the second indication information indicates to resume sending the new HARQ process.

Based on this solution, the network device may enable, by using the second indication information, the first terminal device that receives the second indication information to cancel the suspension in advance, to restart sending the HARQ process on the GF resource in advance. This helps improve GF resource utilization efficiency.

With reference to the first aspect, in a possible design, the first indication information includes an identity of the first terminal device or an identity of a group to which the first terminal device belongs.

With reference to the first aspect, in a possible design, the HARQ resource included in the first HARQ resource pool corresponds to a HARQ process whose identity information is a first identity.

With reference to the first aspect, in a possible design, the first indication information includes the first identity, and the first identity indicates to suspend sending a new HARQ process whose identity information is the first identity.

With reference to the first aspect, in a possible design, the first indication information is carried in a medium access control control element MAC CE or downlink control information DCI. Based on this solution, a plurality of configuration forms of the first indication information are provided, to provide an effective tool for more efficiently containing the memory expansion.

According to a second aspect, a HARQ process management method is provided. The method may be performed by a first terminal device, may be performed by a component (for example, a processor, a chip, or a chip system) of the first terminal device, or may be implemented by a logic module or software that can implement all or some functions of the first terminal device. The following describes the method by using an example in which an execution body is the first terminal device. The method includes: The first terminal device receives first indication information from a network device, where the first indication information indicates to suspend sending a new HARQ process. The first terminal device suspends sending the new HARQ process based on the first indication information.

Based on the HARQ process management method provided in this embodiment of this application, the first terminal device may suspend sending the HARQ process under an indication of the first indication information, to adjust a sending behavior in time and avoid impact on memory of the network device. It can be learned that, according to the HARQ process management method provided in this embodiment of this application, a HARQ process may be efficiently managed, and overall running efficiency of a communication system may be improved.

With reference to the second aspect, in a possible design, the first indication information includes first duration, and the first duration is running duration of a first timer. That the first terminal device suspends sending the new HARQ process based on the first indication information includes: The first terminal device suspends sending the new HARQ process during running of the first timer. Based on this solution, the first indication information may indicate suspension duration.

With reference to the second aspect, in a possible design, the first indication information further includes second duration, and the second duration is a maximum value of random extended duration for suspending sending the new HARQ process after the first timer expires and before the first terminal device restarts sending the new HARQ process. The method further includes: The first terminal device selects, after the first timer expires, a grant free GF resource within first random extended duration to resend the new HARQ process, where the first random extended duration is less than or equal to the second duration.

In a solution in which the first indication information indicates, by using the second duration, the first terminal device to perform random backoff, the following scenario is avoided: In a short period of time after the first duration ends, a plurality of terminal devices simultaneously perform sending in a contention-based manner by using a GF resource. In this way, rapid expansion of a memory resource on a network side in a short period of time after the suspension ends is avoided. It can be learned that in this solution, a transmission success rate of the terminal device is improved through the random backoff while the memory resource on the network side is protected.

With reference to the second aspect, in a possible design, the method further includes: The first terminal device receives second indication information from the network device, where the second indication information indicates to resume sending the new HARQ process. The first terminal device resumes sending the new HARQ process based on the second indication information.

Based on this solution, the first terminal device that receives the second indication information may cancel the suspension in advance, to restart sending the HARQ process on the GF resource in advance. This helps improve GF resource utilization efficiency.

With reference to the second aspect, in a possible design, the first indication information includes an identity of the first terminal device or an identity of a group to which the first terminal device belongs.

With reference to the second aspect, in a possible design, the first indication information includes a first identity, and the first identity indicates to suspend sending a new HARQ process whose identity information is the first identity.

With reference to the second aspect, in a possible design, the first indication information is carried in a medium access control control element MAC CE or downlink control information DCI.

According to a third aspect, a communication apparatus is provided, to implement the foregoing methods. The communication apparatus may be the network device in the first aspect, an apparatus including the network device, or an apparatus included in the network device, for example, a chip.

The communication apparatus includes a corresponding module, unit, or means (means) for implementing the foregoing method. The module, unit, or means may be implemented by hardware, software, or hardware executing corresponding software. The hardware or the software includes one or more modules or units corresponding to the foregoing functions.

With reference to the third aspect, in a possible design, the communication apparatus includes a processing module and a transceiver module. The processing module is configured to determine, based on usage of a HARQ resource in a first HARQ resource pool, that first indication information needs to be sent, where the first HARQ resource pool corresponds to a first grant free GF resource group. The transceiver module is configured to send the first indication information to a first terminal device, where the first indication information indicates to suspend sending a new HARQ process, and the first terminal device is a terminal device configured with at least one GF resource in the first GF resource group.

With reference to the third aspect, in a possible design, the first indication information includes first duration, and the first duration is running duration of a first timer. That the first indication information indicates to suspend sending a new HARQ process includes: The first indication information indicates to suspend sending the new HARQ process during running of the first timer.

With reference to the third aspect, in a possible design, the first indication information further includes second duration, and the second duration is a maximum value of random extended duration for suspending sending the new HARQ process after the first timer expires and before sending of the new HARQ process is restarted.

With reference to the third aspect, in a possible design, the transceiver module is further configured to send second indication information to the first terminal device, where the second indication information indicates to resume sending the new HARQ process.

With reference to the third aspect, in a possible design, the first indication information includes an identity of the first terminal device or an identity of a group to which the first terminal device belongs.

With reference to the third aspect, in a possible design, the HARQ resource included in the first HARQ resource pool corresponds to a HARQ process whose identity information is a first identity.

With reference to the third aspect, in a possible design, the first indication information includes the first identity, and the first identity indicates to suspend sending a new HARQ process whose identity information is the first identity.

With reference to the third aspect, in a possible design, the first indication information is carried in a medium access control control element MAC CE or downlink control information DCI.

According to a fourth aspect, a communication apparatus is provided, to implement the foregoing methods. The communication apparatus may be the first terminal device in the second aspect, an apparatus including the first terminal device, or an apparatus included in the first terminal device, for example, a chip.

The communication apparatus includes a corresponding module, unit, or means (means) for implementing the foregoing method. The module, unit, or means may be implemented by hardware, software, or hardware executing corresponding software. The hardware or the software includes one or more modules or units corresponding to the foregoing functions.

With reference to the fourth aspect, in a possible design, the communication apparatus includes a processing module and a transceiver module. The transceiver module is configured to receive first indication information from a network device, where the first indication information indicates to suspend sending a new HARQ process. The processing module is configured to suspend sending the new HARQ process based on the first indication information.

With reference to the fourth aspect, in a possible design, the first indication information includes first duration, and the first duration is running duration of a first timer. The processing module is specifically configured to suspend sending the new HARQ process during running of the first timer.

With reference to the fourth aspect, in a possible design, the first indication information further includes second duration, and the second duration is a maximum value of random extended duration for suspending sending the new HARQ process after the first timer expires and before sending of the new HARQ process is restarted. The processing module is further configured to select, after the first timer expires, a grant free GF resource within first random extended duration to resend the new HARQ process, where the first random extended duration is less than or equal to the second duration.

With reference to the fourth aspect, in a possible design, the transceiver module is further configured to receive second indication information from the network device, where the second indication information indicates to resume sending the new HARQ process. The processing module is further configured to resume sending the new HARQ process based on the second indication information.

With reference to the fourth aspect, in a possible design, the first indication information includes an identity of the first terminal device or an identity of a group to which the first terminal device belongs.

With reference to the fourth aspect, in a possible design, the first indication information includes a first identity, and the first identity indicates to suspend sending a new HARQ process whose identity information is the first identity.

With reference to the fourth aspect, in a possible design, the first indication information is carried in a medium access control control element MAC CE or downlink control information DCI.

According to a fifth aspect, a communication apparatus is provided, including a processor. The processor is configured to execute instructions stored in a memory, and when the processor executes the instructions, the communication apparatus is enabled to perform the method according to any one of the foregoing aspects. The communication apparatus may be the network device in the first aspect, an apparatus including the network device, or an apparatus included in the network device, for example, a chip. Alternatively, the communication apparatus may be the first terminal device in the second aspect, an apparatus including the first terminal device, or an apparatus included in the first terminal device, for example, a chip.

In a possible design, the communication apparatus further includes the memory, and the memory is configured to store computer instructions. Optionally, the processor and the memory are integrated together, or the processor and the memory are separately disposed.

In a possible design, the memory is coupled to the processor, and is outside the communication apparatus.

According to a sixth aspect, a communication apparatus is provided, including a processor and an interface circuit. The interface circuit is configured to communicate with a module outside the communication apparatus. The processor is configured to perform the method according to any one of the foregoing aspects by using a logic circuit or by running a computer program or instructions. The communication apparatus may be the network device in the first aspect, an apparatus including the network device, or an apparatus included in the network device, for example, a chip. Alternatively, the communication apparatus may be the first terminal device in the second aspect, an apparatus including the first terminal device, or an apparatus included in the first terminal device, for example, a chip.

Alternatively, the interface circuit may be a code/data read/write interface circuit. The interface circuit is configured to: receive computer-executable instructions (the computer-executable instructions are stored in a memory, and may be directly read from the memory or may be read through another component), and transmit the computer-executable instructions to the processor, so that the processor runs the computer-executable instructions to perform the method according to any one of the foregoing aspects.

In some possible designs, the communication apparatus may be a chip or a chip system.

According to a seventh aspect, a computer-readable storage medium is provided. The computer-readable storage medium stores instructions. When the instructions are run on a communication apparatus, the communication apparatus is enabled to perform the method according to any one of the foregoing aspects. The communication apparatus may be the network device in the first aspect, an apparatus including the network device, or an apparatus included in the network device, for example, a chip. Alternatively, the communication apparatus may be the first terminal device in the second aspect, an apparatus including the first terminal device, or an apparatus included in the first terminal device, for example, a chip.

According to an eighth aspect, a computer program product including instructions is provided. When the computer program product runs on a communication apparatus, the communication apparatus is enabled to perform the method according to any one of the foregoing aspects. The communication apparatus may be the network device in the first aspect, an apparatus including the network device, or an apparatus included in the network device. Alternatively, the communication apparatus may be the first terminal device in the second aspect, an apparatus including the first terminal device, or an apparatus included in the first terminal device, for example, a chip.

According to a ninth aspect, a communication apparatus (for example, the communication apparatus may be a chip or a chip system) is provided. The communication apparatus includes a processor, configured to implement the function according to any one of the foregoing aspects. In a possible design, the communication apparatus further includes a memory, and the memory is configured to store necessary program instructions and data. When being the chip system, the communication apparatus may include a chip, or may include a chip and another discrete component.

According to a tenth aspect, a communication system is provided. The communication system includes a network device and a first terminal device. The network device is configured to implement the method according to any design in the first aspect, and the first terminal device is configured to implement the method according to any design in the second aspect.

For technical effects brought by any design manner in the third aspect to the tenth aspect, refer to technical effects brought by different design manners in the first aspect and the second aspect. Details are not described herein again.

### BRIEF DESCRIPTION OF DRAWINGS

FIG. 1 is a diagram of a GF resource according to an embodiment of this application;
FIG. 2 is a diagram of transmitting data by using a HARQ process according to an embodiment of this application;
FIG. 3 is another diagram of transmitting data by using a HARQ process according to an embodiment of this application;
FIG. 4 is a diagram of a structure of a communication system according to an embodiment of this application;
FIG. 5 is a diagram of a structure of a communication apparatus according to an embodiment of this application;
FIG. 6 is an interaction diagram of a HARQ process management method according to an embodiment of this application;
FIG. 7 is a diagram of a changing status of a resource in a first HARQ resource pool according to an embodiment of this application; and
FIG. 8 is a diagram of a structure of another communication apparatus according to an embodiment of this application.

### DESCRIPTION OF EMBODIMENTS

For ease of understanding the technical solutions in embodiments of this application, the following first briefly describes technologies and terms related to this application.

### 1. NTN system

The NTN system is an important part of 5G and a future network. In the NTN system, a satellite may be used as an access network device (for example, a base station), to provide a network service for an area (for example, an area like an ocean or a forest) that cannot be completely covered by a terrestrial mobile communication system. The NTN system includes nodes such as a satellite, a high-altitude platform, and an uncrewed aerial vehicle. Compared with a conventional terrestrial network, the NTN system features that the access network device is in the air or space, and a distance between a terminal device and the access network device is very large.

The large distance means long round-trip time RTT. For example, in a satellite network, at least a millisecond-level propagation delay is increased in one signal round trip. Due to a large delay and a large fluctuation, the access network device and the terminal device need to greatly prolong monitoring window time (at least a millisecond-level propagation delay for an edge user needs to be covered), to capture a message/signaling. Consequently, a transmission delay of the NTN system increases.

Due to wide coverage, a long distance, and a large delay, it may be difficult for scheduling-based/dynamic grant-based service transmission to meet a delay requirement of a service, and grant free/dynamic grant free (Grant Free, GF) transmission is one of common transmission solutions used in a future NTN network to reduce a transmission delay.

### 2. GF transmission protocol

GF transmission means that, before performing uplink transmission, a terminal device does not need to monitor a dynamic grant of a network device to obtain a time-frequency resource and a transmission parameter that are used for sending data, but may select one or more transmission units from a GF transmission resource pool preconfigured by the network device for transmission. In this way, signaling overheads and a transmission delay are reduced. Currently, the GF transmission mainly includes uplink data transmission completed in a random access process, for example, two-step random access (2-step random access channel, 2-step RA) introduced in 5G NR, and direct data transmission, for example, semi-persistent scheduling (semi-persistent scheduling, SPS) in long term evolution (long term evolution, LTE), preconfigured uplink resource (Preconfigured Uplink Resource, PUR)-based transmission, and configured grant (configured grant, CG) transmission in the 5G NR.

The GF transmission resource pool may also be referred to as a GF resource for short. The GF resource is a set of at least one transmission unit (namely, an accessible time-frequency resource). The GF resource is usually configured by the network device by using higher layer signaling, for example, a system message (system information, SI) or terminal-specific (UE-specific) radio resource control (radio resource control, RRC) signaling. The network device may configure one or more GF resources for the terminal device.

A same GF resource may be configured for a plurality of terminal devices. In other words, transmission units that can be used to send data are the same for a plurality of terminal devices corresponding to a same GF resource. In this case, although a transmission failure may be caused because a collision occurs when different terminal devices select a same transmission unit, for a service whose arrival time cannot be determined by the terminal device, because the plurality of terminal devices share the same GF resource, resource utilization efficiency can be improved.

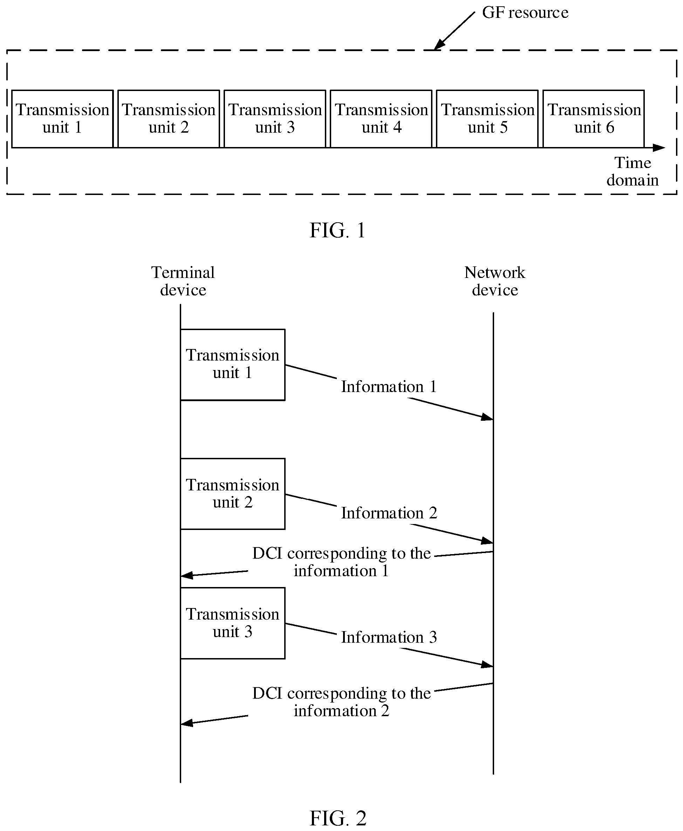

In a same GF resource, a transmission unit is usually periodic. For example, as shown in FIG. 1, one GF resource includes six transmission units. The six transmission units are periodically arranged in time domain, and have same frequency domain resources.

Further, in an NR system, a GF transmission protocol may be applied in combination with a HARQ protocol. A terminal device may send a HARQ process on a configured GF resource to transmit a data packet. Different HARQ processes sent by the terminal device may be distinguished by using IDs of the HARQ processes. For the different HARQ processes sent by the terminal device, different memory areas need to be created on the network device side based on the HARQ processes, to separately store, by using buffer resources, control information and data related to the corresponding HARQ processes.

It should be noted that, after the terminal device transmits data by using a HARQ process, if the terminal device needs to retransmit the data, the retransmitted data and the initially transmitted data belong to the same HARQ process (or the retransmitted data and the initially transmitted data are in the same HARQ process). In other words, the terminal device needs to initiate, only when having newly to-be-transmitted data, a new HARQ process to transmit the newly to-be-transmitted data.

The following describes two specific solutions of transmitting a data packet by using a HARQ process in the NR system.

Solution 1: After sending one HARQ process to the network device, in a monitoring window corresponding to the HARQ process, the terminal device may transmit a new data packet by using a new HARQ process without waiting for feedback of the network device on the HARQ process. After transmitting the data packet by using the HARQ process, the terminal device monitors, in the corresponding monitoring window, feedback of the network device, and determines, based on a feedback result, whether the data packet needs to be retransmitted. If determining that the data packet is successfully transmitted and does not need to be retransmitted, the terminal device may release the HARQ process after the monitoring window corresponding to the HARQ process ends. Correspondingly, the network device may also release a buffer resource corresponding to the HARQ process.

The following describes Solution 1 by using an example with reference to FIG. 2. As shown in FIG. 2, a transmission unit 1, a transmission unit 2, and a transmission unit 3 are in a same GF resource group. After obtaining information 1, a terminal device initiates a HARQ process on the transmission unit 1 to send the information 1 to a network device. Then, in a corresponding monitoring window, the terminal device may continue to initiate a new HARQ process on the transmission unit 2 to send information 2 to the network device, and initiate a new HARQ process on the transmission unit 3 to send information 3 to the network device. For example, it may be assumed that an ID of the HARQ process corresponding to the information 1 is 1, an ID of the HARQ process corresponding to the information 2 is 2, and an ID of the HARQ process corresponding to the information 3 is 3.

Correspondingly, in this process, the network device creates three buffer resources to respectively store data and control information related to the HARQ process corresponding to the information 1, data and control information related to the HARQ process corresponding to the information 2, and data and control information related to the HARQ process corresponding to the information 3. In addition, in this process, the network device may send corresponding feedback information, for example, downlink control information (downlink control information, DCI), to the terminal device, so that the terminal device determines whether retransmission is needed. For example, as shown in FIG. 2, the network device sends, to the terminal device, DCI corresponding to the information 1 and DCI corresponding to the information 2. Although not shown in FIG. 2, the network device may further send, to the terminal device, DCI corresponding to the information 3.

However, if Solution 1 is applied to an NTN system, according to existing related discussions about a HARQ protocol in the NTN system, a total quantity of HARQ processes of a single terminal device may reach 32. In other words, the network device needs to create 32 corresponding buffer resources for the single terminal device to store data and control information related to the corresponding HARQ processes. Because a radius of a cell of the NTN system is large (at a hundred-kilometer level), and a quantity of potential users of the NTN system is far greater than that of a conventional terrestrial network, a requirement for HARQ buffer resources on the network device side is explosively increased. This undoubtedly aggravates a resource shortage problem on the network device side in the NTN system. In addition, in this scenario, a resource used by the terminal device to send the HARQ process is a preconfigured GF resource. In other words, the network device cannot control the HARQ process by dynamically scheduling the resource used by the terminal device to send the HARQ process. Consequently, when the terminal device performs uplink transmission, the HARQ buffer resources on the network device side may expand rapidly in short time, causing impact on memory on the network device side.

Solution 2: After sending one HARQ process to the network device, the terminal device needs to suspend sending a new data packet until the sent HARQ process ends.

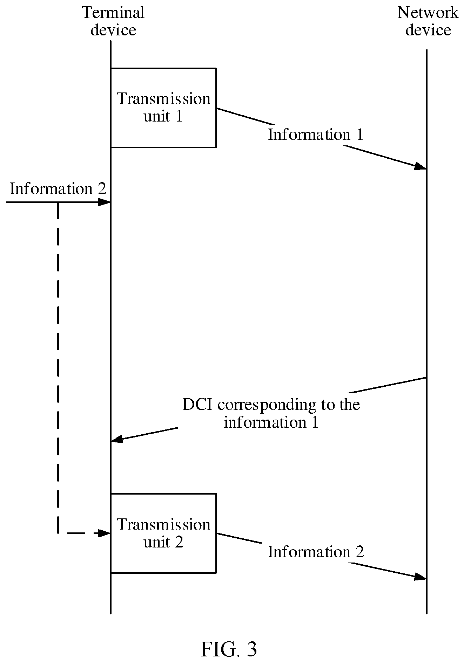

The following describes Solution 2 by using an example with reference to FIG. 3. As shown in FIG. 3, a transmission unit 1 and a transmission unit 2 are in a same GF resource group. After obtaining information 1, a terminal device initiates a HARQ process on the transmission unit 1, to send the information 1 to a network device. Then, after obtaining information 2 in a corresponding monitoring window, the terminal device buffers the information 2, and the terminal device initiates, until the HARQ process corresponding to the information 1 ends, a new HARQ process on the transmission unit 2 to send the information 2 to the network device. For example, it may be assumed that an ID of the HARQ process corresponding to the information 1 is 1, and an ID of the HARQ process corresponding to the information 2 is 2.

Correspondingly, in this process, before the HARQ process corresponding to the information 1 ends, the network device needs to create only one buffer resource to store data and control information related to the HARQ process corresponding to the information 1. After the HARQ process corresponding to the information 1 ends, the network device may release the buffer resource. After the terminal device initiates the HARQ process corresponding to the information 2, the network device may create one new buffer resource to store data and control information related to the HARQ process corresponding to the information 2. In other words, in this process, only one HARQ buffer resource needs to be stored on the network device side.

In this process, the network device may send corresponding feedback information, for example, DCI, to the terminal device, so that the terminal device determines whether retransmission is needed. For example, as shown in FIG. 2, in this process, the network device sends DCI corresponding to the information 1 to the terminal device, where the DCI indicates that the network device successfully receives the information 1, so that the terminal device can determine, based on the DCI, that the information 1 is successfully transmitted, and end the HARQ process corresponding to the information 1. Although not shown in FIG. 2, the network device may further send, to the terminal device, DCI corresponding to the information 2.

In Solution 2, buffer pressure on the network device side is reduced. However, because data transmission is affected by the sent HARQ process, a data transmission delay is increased. In addition, before the sent HARQ process, another transmission unit in a GF resource cannot be used to send a new data packet, GF resource utilization efficiency is low, and a resource waste is caused.

Solution 3: The network device side may convert, by using a solution of converting from grant free to scheduling, some HARQ processes that have been sent on the GF resource to scheduling transmission processes, to release the sent HARQ processes.

In this solution, a problem of ID shortage of HARQ processes on the terminal device side can be alleviated, but memory resource shortage on a network side is not alleviated. A new buffer still needs to be created on the network device side to cope with arrival of a new data packet. In addition, a dedicated signaling notification is required for a procedure of converting from grant free to scheduling. More users who convert from grant free to scheduling indicate higher signaling overheads. This is not conducive to improvement of overall resource utilization efficiency.

Based on the foregoing problems in the conventional technology, an embodiment of this application proposes a HARQ process management method for improvement, to implement efficient HARQ process management, alleviate the resource shortage problem on the network device side, and improve overall resource utilization of the system.

The following describes the technical solutions in embodiments of this application with reference to the accompanying drawings in embodiments of this application. In descriptions of this application, unless otherwise specified, "/" represents an "or" relationship between associated objects. For example, A/B may represent A or B. In this application, "and/or" describes only an association relationship for describing associated objects and represents that three relationships may exist. For example, A and/or B may represent the following three cases: Only A exists, both A and B exist, and only B exists, where A or B may be singular or plural. In addition, in the descriptions of this application, unless otherwise specified, "a plurality of" means two or more than two. "At least one of the following items (pieces)" or a similar expression thereof means any combination of these items, including any combination of singular items (pieces) or plural items (pieces). For example, at least one item (piece) of a, b, or c may indicate: a, b, c, a and b, a and c, b and c, or a, b, and c, where a, b, and c may be singular or plural. In addition, to clearly describe the technical solutions in embodiments of this application, terms such as first and second are used in embodiments of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference. In addition, in embodiments of this application, terms such as "example" or "for example" are used to represent giving an example, an illustration, or a description. Any embodiment or design scheme described as an "example" or "for example" in embodiments of this application should not be explained as being more preferred or having more advantages than another embodiment or design scheme. Exactly, use of the terms such as "example" or "for example" is intended to present a related concept in a specific manner for ease of understanding.

It should be noted that the network architecture and the service scenario described in embodiments of this application are intended to describe the technical solutions in embodiments of this application more clearly, and do not constitute a limitation on the technical solutions provided in embodiments of this application. A person of ordinary skill in the art may know that: With the evolution of the network architecture and the emergence of new service scenarios, the technical solutions provided in embodiments of this application are also applicable to similar technical problems.

The HARQ process management method provided in embodiments of this application is applicable to various communication systems. For example, the HARQ process management method provided in embodiments of this application may be applied to an LTE system, an NR system, a 5G system, an NTN system, or another similar new communication system oriented to the future, for example, a sixth-generation (sixth-generation, 6G) system. This is not specifically limited in embodiments of this application. In addition, the terms "system" and "network" are interchangeable.

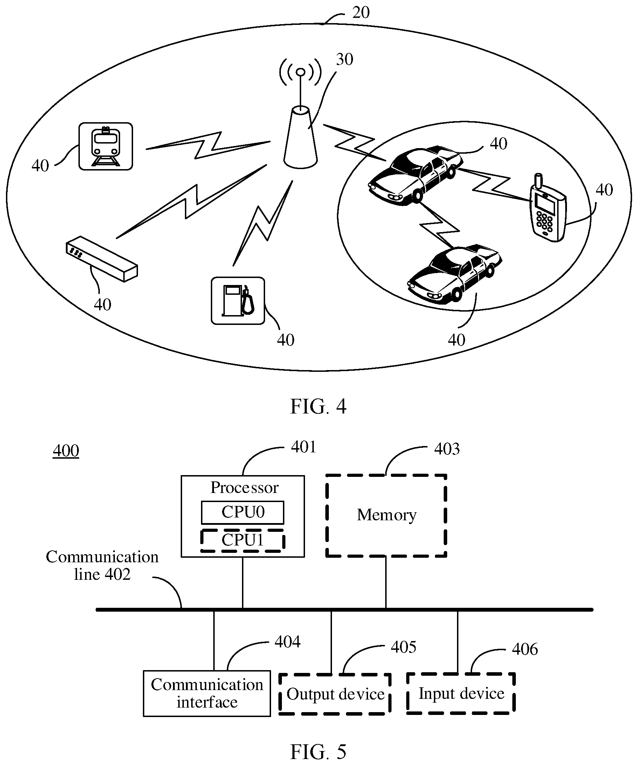

FIG. 4 shows a communication system 20 according to an embodiment of this application. The communication system includes at least one network device 30 and at least one terminal device 40. The terminal device 40 may communicate with the network device 30 in a wireless manner. Optionally, different network devices 30 may communicate with each other. Optionally, different terminal devices 40 may communicate with each other. The network device 30 and/or the terminal device 40 may be at fixed positions, or may be movable.

It should be noted that FIG. 4 is merely a diagram. Although not shown, another network device may further be included in the communication system 20. For example, the communication system 20 may further include one or more of a core network (core network, CN) device, a wireless relay device, and a wireless backhaul device. This is not specifically limited herein. The network device may be connected to the core network device in a wireless or wired manner. The core network device and the network device 30 may be different independent physical devices, or functions of the core network device and logic functions of the network device 30 may be integrated into a same physical device, or some functions of the core network device and some functions of the network device 30 may be integrated into one physical device. This is not specifically limited in embodiments of this application.

For example, the network device 30 shown in FIG. 4 interacts with any terminal device 40 (the terminal device is referred to as a first terminal device below). In the HARQ process management method provided in embodiments of this application, the network device determines, based on usage of a HARQ resource in a first HARQ resource pool, that first indication information needs to be sent, where the first HARQ resource pool corresponds to a first grant free GF resource group. Then, the network device sends the first indication information to the first terminal device, where the first indication information indicates to suspend sending a new HARQ process. After receiving the first indication information, the first terminal device suspends sending the new HARQ process based on the first indication information. Specific implementation and technical effects of the solution are described in detail in subsequent method embodiments, and details are not described herein.

Optionally, the communication system 20 shown in FIG. 3 may be applied to a network architecture of an NTN system. This is not specifically limited in embodiments of this application.

Optionally, the network device in embodiments of this application is a device that connects the terminal device to a wireless network. The network device in embodiments of this application may include base stations (base stations) in various forms, for example, may be a macro base station, a micro base station (also referred to as a small cell), a relay station, an access point, a transmitting point (transmitting point, TP), an evolved NodeB (evolved NodeB, eNodeB), a transmission reception point (transmission reception point, TRP), a next generation NodeB (next generation NodeB, gNB) in a 5G mobile communication system, a device that implements a base station function in a communication system evolved after 5G, a mobile switching center, a device that performs a base station function in device-to-device (Device-to-Device, D2D), vehicle-to-everything (vehicle-to-everything, V2X), or machine-to-machine (machine-to-machine, M2M) communication, or the like; may be a network device in an NTN communication system, in other words, may be deployed on a high-altitude platform or a satellite; or may be a module or a unit that completes some functions of a base station, for example, may be a central unit (central unit, CU) or a distributed unit (distributed unit, DU) in a cloud access network (cloud radio access network, C-RAN) system. A specific technology and a specific device form that are used by the network device are not limited in embodiments of this application. All or some functions of the network device in this application may alternatively be implemented by using a software function running on hardware, or may be implemented by using a virtualization function instantiated on a platform (for example, a cloud platform). In this application, unless otherwise specified, the network device is a radio access network (radio access network, RAN) device.

Optionally, the terminal device in embodiments of this application may be a device having a wireless transceiver function, or may be referred to as a terminal (terminal). The terminal device may be specifically user equipment (user equipment, UE), an access terminal, a subscriber unit (subscriber unit), a subscriber station, a mobile station (mobile station), customer-premises equipment (customer-premises equipment, CPE), a remote station, a remote terminal, a mobile device, a mobile terminal, a user terminal, a wireless communication device, a user agent, a user apparatus, or the like. The terminal device may alternatively be a satellite phone, a cellular phone, a smartphone, a cordless phone, a session initiation protocol (session initiation protocol, SIP) phone, a wireless data card, a wireless modem, a tablet computer, a computer with a wireless transceiver function, a wireless local loop (wireless local loop, WLL) station, a personal digital assistant (personal digital assistant, PDA), a handheld device with a wireless communication function, a computing device or another processing device connected to a wireless modem, a vehicle-mounted device, a communication device on a high-altitude aircraft, a wearable device, an uncrewed aerial vehicle, a robot, an intelligent point of sale (point of sale, POS) machine, a machine type communication device, a terminal device in D2D, a terminal device in V2X, a terminal device in virtual reality (virtual reality, VR), a terminal device in augmented reality (augmented reality, AR), a wireless terminal in industrial control (industrial control), a wireless terminal in self driving (self driving), a wireless terminal in telemedicine (telemedicine), a wireless terminal in a smart grid (smart grid), a wireless terminal in transportation security (transportation safety), a wireless terminal in a smart city (smart city), a wireless terminal in a smart home (smart home), a terminal device in a future communication network, or the like. A specific technology and a specific device form that are used by the terminal device are not limited in embodiments of this application. All or some functions of the terminal device in this application may alternatively be implemented by using a software function running on hardware, or may be implemented by using a virtualization function instantiated on a platform (for example, a cloud platform).

Optionally, in embodiments of this application, the network device and the terminal device may be deployed on land, including an indoor device, an outdoor device, a handheld device, or a vehicle-mounted device; may be deployed on water; or may be deployed on an airplane, a balloon, and a satellite in the air. Application scenarios of the network device and the terminal device are not limited in embodiments of this application.

Optionally, the network device and the terminal device in embodiments of this application may communicate with each other through a licensed spectrum, may communicate with each other through an unlicensed spectrum, or may communicate with each other through both a licensed spectrum and an unlicensed spectrum. The network device and the terminal device may communicate with each other by using a spectrum below 6 gigahertz (gigahertz, GHz), may communicate with each other by using a spectrum above 6 GHz, or may communicate with each other by using both a spectrum below 6 GHz and a spectrum above 6 GHz. A spectrum resource used between the network device and the terminal device is not limited in embodiments of this application.

Optionally, the network device and the terminal device in embodiments of this application may also be referred to as communication apparatuses, and each may be a general-purpose device or a dedicated device. This is not specifically limited in embodiments of this application.

Optionally, a related function of the network device or the terminal device in embodiments of this application may be implemented by one device, may be jointly implemented by a plurality of devices, or may be implemented by one or more functional modules in one device. This is not specifically limited in embodiments of this application. It may be understood that the foregoing function may be a network element in a hardware device, a software function running on dedicated hardware, a combination of hardware and software, or a virtualization function instantiated on a platform (for example, a cloud platform).

For example, the related function of the network device or the terminal device in embodiments of this application may be implemented by a communication apparatus 400 in FIG. 5. FIG. 5 is a diagram of a structure of the communication apparatus 400 according to an embodiment of this application. The communication apparatus 400 includes one or more processors 401, a communication line 402, and at least one communication interface (in FIG. 5, an example in which a communication interface 404 and one processor 401 are included is only used for description). Optionally, the communication apparatus 400 may further include a memory 403.

The processor 401 may be a general-purpose central processing unit (central processing unit, CPU), a microprocessor, an application-specific integrated circuit (application-specific integrated circuit, ASIC), or one or more integrated circuits configured to control program execution of the solutions in this application.

The communication line 402 may include a channel for connecting different components.

The communication interface 404 may be a transceiver module configured to communicate with another device or a communication network, for example, an Ethernet, a RAN, or a wireless local area network (wireless local area network, WLAN). For example, the transceiver module may be an apparatus like a transceiver or a transceiver machine. Optionally, the communication interface 404 may alternatively be a transceiver circuit located in the processor 401, configured to implement signal input and signal output of the processor.

The memory 403 may be an apparatus having a storage function. For example, the memory 403 may be a read-only memory (read-only memory, ROM) or another type of static storage device capable of storing static information and instructions, a random access memory (random access memory, RAM) or another type of dynamic storage device capable of storing information and instructions, an electrically erasable programmable read-only memory (electrically erasable programmable read-only memory, EEPROM), a compact disc read-only memory (compact disc read-only memory, CD-ROM) or another compact disc storage, an optical disc storage (including a compact disc, a laser disc, an optical disc, a digital versatile disc, a Blu-ray disc, and the like), a magnetic disk storage medium or another magnetic storage device, or any other medium that can be used to carry or store expected program code in an instruction form or a data structure form and that can be accessed by a computer, but is not limited thereto. The memory may exist independently, and is connected to the processor through the communication line 402. The memory may alternatively be integrated with the processor.

The memory 403 is configured to store computer-executable instructions for performing the solutions in this application, and the processor 401 controls execution. The processor 401 is configured to execute the computer-executable instructions stored in the memory 403, to implement the HARQ process management method provided in embodiments of this application.

Alternatively, optionally, in this embodiment of this application, the processor 401 may perform a processing-related function in a HARQ process management method provided in the following embodiments of this application. The communication interface 404 is responsible for communicating with another device or a communication network. This is not specifically limited in this embodiment of this application.

Optionally, the computer-executable instructions in this embodiment of this application may also be referred to as application program code. This is not specifically limited in this embodiment of this application.

In specific implementation, in an embodiment, the processor 401 may include one or more CPUs, for example, a CPU0 and a CPU1 in FIG. 5.

In specific implementation, in an embodiment, the communication apparatus 400 may include a plurality of processors, for example, the processor 401 in FIG. 5 and an optional processor 408 (not shown in FIG. 5). Each of these processors may be a single-core (single-core) processor, or may be a multi-core (multi-core) processor. The processor herein may include but is not limited to at least one of the following: various computing devices that run software, such as a central processing unit (central processing unit, CPU), a microprocessor, a digital signal processor (DSP), a microcontroller unit (microcontroller unit, MCU), or an artificial intelligence processor. Each type of computing device may include one or more cores for executing software instructions to perform an operation or processing.

In specific implementation, in an embodiment, the communication apparatus 400 may further include an output device 405 and an input device 406. The output device 405 communicates with the processor 401, and may display information in a plurality of manners. For example, the output device 405 may be a liquid crystal display (liquid crystal display, LCD), a light emitting diode (light emitting diode, LED) display device, a cathode ray tube (cathode ray tube, CRT) display device, or a projector (projector). The input device 406 communicates with the processor 401, and may receive an input of a user in a plurality of manners. For example, the input device 406 may be a mouse, a keyboard, a touchscreen device, or a sensor device.

The communication apparatus 400 may also be referred to as a communication apparatus sometimes, and may be a general-purpose device or a dedicated device. For example, the communication apparatus 400 may be a desktop computer, a portable computer, a network server, a palmtop computer (personal digital assistant, PDA), a mobile phone, a tablet computer, a wireless terminal apparatus, an embedded device, the foregoing terminal apparatus, the foregoing network apparatus, or a device having a structure similar to that in FIG. 5. A type of the communication apparatus 400 is not limited in this embodiment of this application.

With reference to FIG. 1 to FIG. 5, the following describes in detail the HARQ process management method provided in embodiments of this application by using an example in which the network device 30 interacts with any terminal device 40 in FIG. 4.

It should be noted that names of messages between network elements, names of parameters in the messages, or the like in the following embodiments of this application are merely examples, and there may be other names in specific implementation. This is not specifically limited in embodiments of this application.

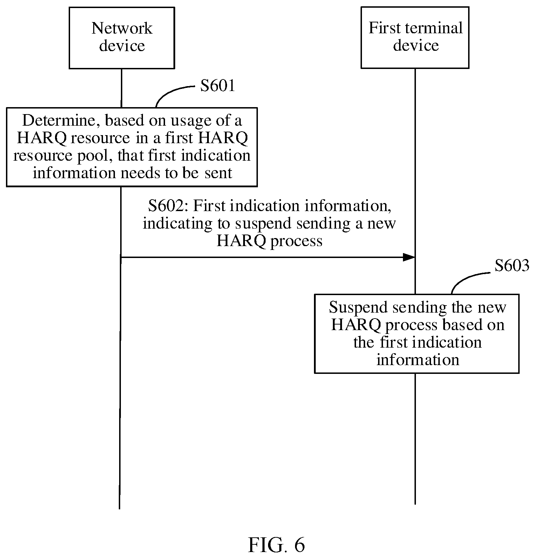

FIG. 6 shows a HARQ process management method according to an embodiment of this application. In FIG. 6, an example in which a network device and a first terminal device are used as execution bodies of an interaction example is used to illustrate the method. However, the execution bodies of the interaction example are not limited in this application. For example, the network device in FIG. 6 may alternatively be a chip, a chip system, or a processor that supports the network device in implementing the method, or may be a logic module or software that can implement all or some functions of the network device. The first terminal device in FIG. 6 may alternatively be a chip, a chip system, or a processor that supports the terminal device in implementing the method, or may be a logic module or software that can implement all or some functions of the terminal device. The HARQ process management method includes S601 to S603.

S601: The network device determines, based on usage of a HARQ resource in a first HARQ resource pool, that first indication information needs to be sent, where the first HARQ resource pool corresponds to a first grant free GF resource group.

S602: The network device sends the first indication information to the first terminal device, where the first indication information indicates to suspend sending a new HARQ process. Correspondingly, the first terminal device receives the first indication information. The first terminal device is a terminal device configured with the first GF resource group.

S603: The first terminal device suspends sending the new HARQ process based on the first indication information.

Based on the HARQ process management method provided in this embodiment of this application, the network device may actively determine, based on the usage of the resource in the first HARQ resource pool, whether to deliver the first indication information, so that the first terminal device may suspend sending the HARQ process under an indication of the first indication information. In this way, a trend of memory expansion on a network side is restrained in time, pressure of HARQ resource shortage in the HARQ resource pool is relieved, and there is space for the network device to process expansion of a HARQ buffer resource. It can be learned that, according to the HARQ process management method provided in this embodiment of this application, a HARQ process may be efficiently managed, and overall running efficiency of a communication system may be improved.

The following describes S601 to S603 in detail.

In S601, the network device may monitor the usage of the HARQ resource in the first HARQ resource pool, and determine, based on the usage of the HARQ resource in the first HARQ resource pool, whether to deliver the first indication information.

The first HARQ resource pool includes a buffer resource used to store data and/or control information related to the HARQ process on the network device side (the buffer resource herein may also be referred to as a memory resource occupied by the HARQ process on the network device side).

It should be noted that in this embodiment of this application, the buffer resource in the first HARQ resource pool may also be referred to as a resource node in the first HARQ resource pool, a HARQ process buffer resource in the first HARQ resource pool, a HARQ resource in the first HARQ resource pool, a memory resource in the first HARQ resource pool, or the like. A specific name of a resource in the first HARQ resource pool is not limited in this embodiment of this application.

In this embodiment of this application, one resource node in the first HARQ resource pool corresponds to one HARQ process (or one HARQ process occupies one resource node in the first HARQ resource pool). When a specific HARQ process that occupies one resource node in the first HARQ resource pool is released, an occupied HARQ node correspondingly returns to an idle state.

It should be noted that a quantity of resource nodes in the first HARQ resource pool is not limited in this embodiment of this application, may be determined based on implementation on the network device side, and may be an unfixed value that can be updated.

Optionally, the resource node in the first HARQ resource pool may have identity information. In a possible implementation, the identity information of the resource node in the first HARQ resource pool may be identity information of a terminal device that sends a corresponding HARQ process. For example, identity information of a resource node 1 in the first HARQ resource pool is UE1, indicating that the resource node 1 corresponds to a HARQ process sent by the UE1. Alternatively, the identity information of the resource node in the first HARQ resource pool may indicate a corresponding HARQ process. For example, identity information of a resource node 1 in the first HARQ resource pool is ID X, where X = Ue-i * 32 + j, indicating that the resource node 1 corresponds to a j^{th} HARQ process sent by UEi. For another example, identity information of a resource node 1 in the first HARQ resource pool is UE1-ID1, indicating that the resource node 1 corresponds to a 1^{st} HARQ process sent by UE1.

In this embodiment of this application, the first HARQ resource pool corresponds to the first GF resource group. The first GF resource group includes at least one GF resource. Optionally, the first GF resource group may be configured by the network device.

It should be noted that a quantity and time-frequency domain positions of GF resources in the first GF resource group are not limited in this embodiment of this application.

Optionally, based on the first GF resource group, the first HARQ resource pool may be classified in the following two manners:
Manner 1: The first HARQ resource pool is oriented to all first terminal devices.

The first terminal device is a terminal device that is configured with at least one GF resource in the first GF resource group and that may send a HARQ process by using the configured GF resource in the first GF resource group. In other words, all terminal devices that use the GF resource in the first GF resource group may share the first HARQ resource pool.

In this manner, each HARQ process sent on the GF resource in the first GF resource group may occupy one HARQ resource in the first HARQ resource pool. For example, the first terminal device sends one HARQ process on a GF resource 1 in the first GF resource group, sends another HARQ process on a GF resource 2 in the first GF resource group, and each of the two HARQ processes occupies one HARQ resource in the first HARQ resource pool.

In conclusion, it may be understood that in Manner 1, use of the first HARQ resource pool complies with the following rules:
(1) In all the first terminal devices, one HARQ process of each first terminal device occupies one HARQ resource in the first HARQ resource pool.
(2) The first terminal device enters the first HARQ resource pool when initiating a new HARQ process, and exits the first HARQ resource pool after the HARQ process ends.

Manner 2: The HARQ resource pool is classified based on identity information of a HARQ process (for example, an ID of a HARQ process). For all first terminal devices, first terminal devices that initiate HARQ processes with same identity information share a same HARQ resource pool. In other words, HARQ processes that have different identity information and that are sent by the first terminal device belong to different HARQ resource pools.

In Manner 2, a HARQ resource pool corresponding to a HARQ process whose identity information is a first identity may be referred to as the first HARQ resource pool. In other words, each HARQ resource included in the first HARQ resource pool corresponds to the HARQ process whose identity information is the first identity. The HARQ resource included in the first HARQ resource pool may be occupied by the HARQ process whose identity information is the first identity, and a HARQ process whose identity information is not the first identity cannot occupy the HARQ resource in the first HARQ resource pool.

It should be noted that the first identity is not specifically limited in this embodiment of this application. When the terminal device may send a plurality of HARQ processes with different identity information, the first identity may be identity information of any HARQ process. In other words, for a same GF resource group, there may be a plurality of first HARQ resource pools corresponding to different first identities.

For example, it is assumed that a first terminal device 1 sends a HARQ process whose ID is 1 and a HARQ process whose ID is 2, and a first terminal device 2 sends a HARQ process whose ID is 2. The HARQ process whose ID is 1 may occupy one HARQ resource in a first HARQ resource pool corresponding to the ID 1, and the two HARQ processes whose IDs are 2 may occupy two HARQ resources in a first HARQ resource pool corresponding to the HARQ ID 2.

In conclusion, it may be understood that in Manner 2, use of the first HARQ resource pool complies with the following rules:
(1) In HARQ processes sent by all the first terminal devices, the HARQ process whose identity information is the first identity occupies one HARQ resource in the first HARQ resource pool.
(2) When initiating a new HARQ process, the first terminal device enters a corresponding first HARQ resource pool based on identity information of the HARQ process, and exits the first HARQ resource pool after the HARQ process ends.

It may be understood that when HARQ resources in the first HARQ resource pool are fully occupied, all first terminal devices that share the first HARQ resource pool cannot initiate a HARQ process that occupies the HARQ resource in the first HARQ resource pool. This affects data transmission of the terminal device. Based on this, the network device may determine, based on usage of the resource in the first HARQ resource pool, whether to deliver the first indication information. The first indication information indicates to suspend sending a new HARQ process. Details are described in S602, and are not described herein.

Optionally, the network device may determine, based on overall usage of the resource in the first HARQ resource pool, whether to deliver the first indication information. Alternatively, the network device may determine, based on usage of a resource used by a single terminal device in the first HARQ resource pool, whether to deliver the first indication information. The following specifically describes a case in which the network device determines, based on the usage of the resource in the first HARQ resource pool, whether to deliver the first indication information.

In a possible implementation, the network device may determine whether a quantity of HARQ resources currently occupied by all the first terminal devices in the first HARQ resource pool meets a first preset threshold. If the quantity is greater than or equal to the first preset threshold, the network device delivers the first indication information. Alternatively, the network device may determine whether a quantity of HARQ resources currently occupied by a specific first terminal device in the first HARQ resource pool meets a second preset threshold. If the quantity is greater than or equal to the second preset threshold, the network device delivers the first indication information.

In another possible implementation, the network device may predict the usage of the resource in the first HARQ resource pool. If predicting that a quantity of HARQ resources occupied by all the first terminal devices in the first HARQ resource pool is to meet a third preset threshold, the network device determines to deliver the first indication information. For example, the network device may predict a quantity of resources occupied by all the first terminal devices in the first HARQ resource pool after a preset time period (for example, after 5s). If predicting that the quantity of resources occupied by all the first terminal devices in the first HARQ resource pool after the preset time period meets the third preset threshold, the network device determines to deliver the first indication information. Alternatively, if predicting that a quantity of HARQ resources occupied by a specific first terminal device in the first HARQ resource pool is to meet a fourth preset threshold, the network device determines to deliver the first indication information.

Optionally, in this implementation, the network device may predict the usage of the HARQ resource in the first HARQ resource pool based on a configured algorithm model and related information (for example, information such as current usage of the HARQ resource in the first HARQ resource pool and historical usage of the HARQ resource in the first HARQ resource pool).

Optionally, the first preset threshold, the second preset threshold, the third preset threshold, or the fourth preset threshold may be fixed, or may be updated. For example, the network device may lower the preset threshold when memory resources are insufficient, to avoid resource insufficiency.

Optionally, the first preset threshold, the second preset threshold, the third preset threshold, or the fourth preset threshold may be set based on a factor like an application scenario, a size of an available buffer resource of the network device, or a service requirement. A value of the first preset threshold, the second preset threshold, the third preset threshold, or the fourth preset threshold is not specifically limited in this embodiment of this application. For example, the third preset threshold may be a quantity of HARQ resources included in the first HARQ resource pool. When predicting that the first HARQ resource pool is to be fully occupied, the network device determines to deliver the first indication information.

Optionally, the first preset threshold, the second preset threshold, the third preset threshold, and the fourth preset threshold may be different. For example, the second preset threshold may be 5. If determining that a quantity of HARQ resources occupied by a specific terminal device in the first HARQ resource pool is greater than or equal to 5, the network device determines that the first indication information needs to be delivered. The first preset threshold may be 25. If determining that a quantity of occupied HARQ resources in the first HARQ resource pool is greater than or equal to 25, the network device determines that the first indication information needs to be delivered.

Optionally, the first preset threshold and the third preset threshold may be the same. The second preset threshold and the fourth preset threshold may be the same.

Optionally, when the first HARQ resource pool is classified based on the foregoing Manner 1, the network device may monitor the overall usage of the resource in the first HARQ resource pool, or may monitor usage of a resource used by a single terminal device in the first HARQ resource pool, to determine whether to deliver the first indication information. When the first HARQ resource pool is classified based on the foregoing Manner 2, the network device may predict the overall usage of the resource in the first HARQ resource pool, to determine whether to deliver the first indication information. Certainly, how the network device monitors or predicts the usage of the resource in the first HARQ resource pool based on different classification manners is not specifically limited in this embodiment of this application.

Optionally, the network device may monitor or predict the usage of the HARQ resource in the first HARQ resource pool in real time. Alternatively, the network device may periodically monitor or predict the usage of the HARQ resource in the first HARQ resource pool. For example, the network device may monitor the usage of the HARQ resource in the first HARQ resource pool once every 5s, or may keep monitoring the usage of the HARQ resource in the first HARQ resource pool.

For S602, after determining, based on the usage of the HARQ resource in the first HARQ resource pool, that the first indication information needs to be sent, the network device sends the first indication information to the first terminal device. The first indication information indicates to suspend sending a new HARQ process. Correspondingly, the first terminal device receives the first indication information.

Optionally, the network device may send the first indication information in a broadcast, multicast, or unicast manner.

If sending the first indication information in a broadcast manner, the network device may broadcast the first indication information to a terminal device currently in communication with the network device, and possibly not only the first terminal device receives the first indication information.

If sending the first indication information in a multicast manner, the network device may add all the first terminal devices to a multicast group, and send the first indication information to the first terminal devices in the multicast group. Alternatively, the network device may add a first terminal device that needs to suspend sending the new HARQ process to a multicast group, and send the first indication information to the first terminal device in the multicast group. When the network device determines, based on usage of a resource used by a single terminal device in the first HARQ resource pool, to deliver the first indication information, the first terminal device that needs to suspend sending the new HARQ process is the single terminal device. When the network device determines, based on the overall usage of the resource in the first HARQ resource pool, to deliver the first indication information, the first terminal devices that need to suspend sending the new HARQ process are all the first terminal devices.

If sending the first indication information in a unicast manner, the network device may separately send the first indication information to each first terminal device in a unicast manner. Alternatively, the network device may separately send, in a unicast manner, the first indication information to the first terminal device that needs to suspend sending the new HARQ process. For the first terminal device that needs to suspend sending the new HARQ process, refer to the foregoing descriptions.

Optionally, the first indication information may be born or carried in a medium access control (medium access control, MAC) control element (control element, CE) or DCI.

The following describes the first indication information in detail with reference to different cases.

If the first HARQ resource pool is classified based on the foregoing Manner 1, the first indication information may include at least one of the following information:
An identity of the first terminal device or an identity of a group to which the first terminal device belongs. In this way, the first terminal device that receives the first indication information may determine, based on identity information in the first indication information, that the first terminal device needs to suspend sending the new HARQ process; and another terminal device that receives the first indication information may determine, based on the identity information in the first indication information, that the another terminal device does not need to suspend sending a HARQ process. The identity of the group to which the first terminal device belongs may be one piece of identity information allocated by the network device to one group, where the network device groups all the first terminal devices into the group. In other words, the group includes all terminal devices configured with the GF resource in the first GF resource group.

Optionally, when the network device determines, based on usage of a resource used by a single terminal device in the first HARQ resource pool, to deliver the first indication information, the first indication information may include an identity of a corresponding first terminal device. When the network device determines, based on the overall resource usage of the first HARQ resource pool, to deliver the first indication information, the first indication information may include the identity of the group to which the first terminal device belongs.

First duration. The first duration is duration of a first timer. Specifically, after receiving the first indication information, the first terminal device starts, under an indication of the first indication information, the first timer whose duration is the first duration, and suspends sending the new HARQ process during running of the first timer.

In this case, the new HARQ process whose sending is suspended by the first terminal device based on the first indication information is a HARQ process whose identity information is different from identity information of a previously sent HARQ process (specifically, the HARQ process previously sent on the GF resource in the first GF resource group). In other words, after receiving the first indication information, the first terminal device may further complete transmission corresponding to the previously sent HARQ process.

Optionally, in a scenario in which the new HARQ process is used to transmit newly to-be-transmitted data, and retransmitted data may be transmitted by using the previously sent HARQ process, after receiving the first indication information, the first terminal device may further transmit a retransmitted data packet by using the previously sent HARQ process. For example, if the first terminal device sends the HARQ process whose ID is 1 on the GF resource 1 in the first GF resource group, after receiving the first indication information, the first terminal device suspends the new HARQ process, but the HARQ process whose ID is 1 may exist. If determining that data previously transmitted by using the HARQ process whose ID is 1 needs to be retransmitted, the first terminal device may still retransmit the data by using the HARQ process whose ID is 1.

Optionally, if the first indication information includes the first duration, the first indication information may further include second duration. The second duration is a maximum value of random extended duration for suspending sending the new HARQ process after the first timer expires and before the first terminal device restarts sending the new HARQ process. After receiving the first indication information, the first terminal device may determine, based on the second duration, first random extended duration that is less than or equal to the second duration, and still suspend sending the new HARQ process within the first random extended duration after the first timer expires.

For example, it is assumed that in the first indication information, the first duration is 10, the second duration is 5, and time units of the first duration and the second duration are both millisecond (ms). After receiving the first indication information, the first terminal device starts a first timer whose duration is 10 ms, and suspends sending the HARQ process during running of the first timer. In addition, the first terminal device randomly determines a number in a range of 0 to 5. Assuming that the random number is 3, the first terminal device additionally extends, after 10 ms of timing of the first timer ends, duration of suspending sending the HARQ process by 3 ms. In other words, after receiving the first indication information, the first terminal device suspends sending the HARQ process within 13 ms. After the 13 ms, the first terminal device restarts sending the HARQ process, and may send the HARQ process on the GF resource in the first GF resource group again.

In a solution in which the first indication information indicates, by using the second duration, the first terminal device to perform random backoff, the following scenario is avoided: In a short period of time after the first duration ends, a plurality of terminal devices simultaneously perform sending in a contention-based manner by using a GF resource. In this way, rapid expansion of a memory resource on the network side in a short period of time after the suspension ends is avoided. It can be learned that in this solution, a transmission success rate of the terminal device is improved through the random backoff while the memory resource on the network side is protected.

If the first HARQ resource pool is classified based on the foregoing Manner 2, the first indication information may include at least one of the following information:
An identity of a group to which the first terminal device belongs. In this way, the first terminal device that receives the first indication information may determine, based on identity information in the first indication information, that the first terminal device needs to suspend sending the new HARQ process; and another terminal device that receives the first indication information may determine, based on the identity information in the first indication information, that the another terminal device does not need to suspend sending a HARQ process. For details, refer to the foregoing descriptions. Details are not described herein again.

First duration. The first duration is duration of a first timer. For details, refer to the foregoing descriptions. Details are not described herein again.

First identity. After receiving the first indication information, the first terminal device may suspend sending, based on the first identity in the first indication information, a new HARQ process whose identity information is the first identity. It may be understood that, based on monitored or predicted usage of HARQ resources in one or more first HARQ resource pools, the first indication information may include one or more corresponding first identities.

In this case, the suspending sending, by the first terminal device based on the first identity in the first indication information, the new HARQ process whose identity information is the first identity specifically includes the following cases:
If the first terminal device has sent, on the GF resource in the first GF resource group before receiving the first indication information, the HARQ process whose identity information is the first identity, after receiving the first indication information, the terminal device may still complete transmission (for example, retransmission) corresponding to the HARQ process whose identity information is the first identity. If the first terminal device does not send, on the GF resource in the first GF resource group before receiving the first indication information, the HARQ process whose identity information is the first identity, after receiving the first indication information, the terminal device suspends sending the new HARQ process by using the first identity.

Optionally, if the first indication information includes the first duration, the first indication information may further include second duration. For details, refer to the foregoing descriptions. Details are not described herein again.

Optionally, the network device may further send second indication information to the first terminal device, where the second indication information indicates the first terminal device to resume sending the HARQ process (or restart sending the HARQ process). Correspondingly, the first terminal device receives the second indication information. It may be understood that, because the first terminal device suspends sending the corresponding HARQ process under the indication of the first indication information, correspondingly, the first terminal device restarts sending, based on an indication of the second indication information, the HARQ process whose sending is suspended previously, that is, the new HARQ process whose sending is suspended. For details, refer to the foregoing descriptions of the first indication information.

Depending on whether the first indication information includes the first duration and whether the first indication information includes the second duration, the following describes in detail different cases in which the first terminal device restarts sending the HARQ process based on the second indication information.

The first indication information includes the first duration, but does not include the second duration. In this case, after receiving the second indication information, the first terminal device immediately cancels the suspension, and restarts sending the HARQ process. In other words, the first terminal device ends the first timer in advance after receiving the second indication information.

The first indication information includes the first duration and the second duration. In this case, in a possible implementation, after receiving the second indication information, the first terminal device immediately cancels the suspension, and restarts sending the HARQ process. In other words, after receiving the second indication information, the first terminal device ends the first timer in advance and disables the second duration. In another possible implementation, after receiving the second indication information, the first terminal device ends the first timer in advance, and enables the second duration. To be specific, the first terminal device determines, based on the second duration, random extended duration after the first timer expires and before the sending of the HARQ process is restarted.

The first indication information does not include the first duration (naturally, the first indication information does not include the second duration either). In this case, after receiving the second indication information, the first terminal device immediately cancels the suspension, and restarts sending the HARQ process.

Optionally, the second indication information may be signaling different from the first indication information. After receiving the second indication information, the first terminal device ends the first timer in advance based on the indication of the second indication information. Alternatively, the second indication information may be used to enable indication information that is in the first indication information and that is used to resume sending the HARQ process. After receiving the second indication information, the first terminal device enables the corresponding indication information in the first indication information, and restarts sending the HARQ process.

Based on this solution, the network device may enable, by using the second indication information, the first terminal device that receives the second indication information to cancel the suspension in advance, to restart sending the HARQ process on the GF resource in advance. This helps improve GF resource utilization efficiency.

In S603, after receiving the first indication information, the first terminal device suspends sending the corresponding HARQ process based on the first indication information until the suspension is canceled, and the first terminal device may restart sending the HARQ process. For how the first terminal device suspends sending the corresponding HARQ process based on the first indication information, refer to related descriptions of the first indication information in S602. Details are not described herein again. In a suspension period, if needing to send a new data packet, the first terminal device may initiate a new HARQ process by using identity information that is not suspended (namely, identity information that is not carried in the first indication information).

Restarting sending the HARQ process by the first terminal device needs to meet any one of the following conditions or cases:
1. Suspension time configured by the network device for the first terminal device has expired, and the first terminal device receives no new first indication information before the suspension time expires. The suspension time is determined based on the first duration in the first indication information and the optional second duration. For details, refer to the foregoing descriptions of the first indication information in S602.
2. The first terminal device receives the second indication information sent by the network device, and ends the suspension in advance. For details about how the first terminal device ends the suspension based on the second indication information, refer to the foregoing descriptions of the first indication information and the second indication information in S602.

After restarting sending the HARQ process, the first terminal device may send the HARQ process on the configured GF resource in the first GF resource group.

Optionally, after restarting the HARQ process, the first terminal device may randomly select a transmission unit from the configured GF resource to send the new HARQ process. Alternatively, the first terminal device may select a latest transmission unit from the configured GF resource to send the new HARQ process.

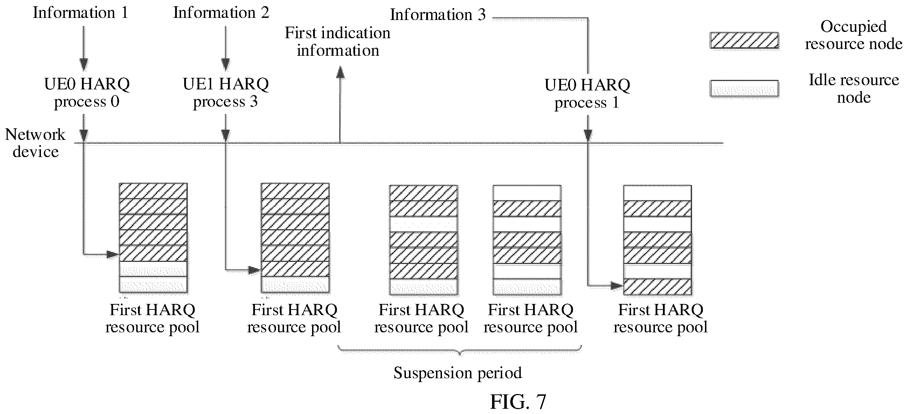

The following describes, with reference to an example shown in the accompanying drawing, a HARQ process management method provided in an embodiment of this application. As shown in FIG. 7, it is assumed that a first terminal device includes UE0 and UE1. After obtaining information 1, the UE0 sends the information 1 to a network device by using a HAQR process whose HARQ ID is 0 (referred to as a HARQ process 0 below). In this case, the HARQ process 0 occupies one resource node in a first HARQ resource pool. Then, the UE1 obtains information 2, sends the information 2 to the network device by using a HARQ process whose HARQ ID is 3 (referred to as a HARQ process 3 below). In this case, the HARQ process 3 occupies one resource node in the first HARQ resource pool. The network device predicts, based on current usage of a resource in the first HARQ resource pool, that the resource in the first HARQ resource pool is to be fully occupied, and first indication information needs to be sent. The network device sends the first indication information to all first terminal devices (including the UE0 and the UE1), to indicate the first terminal devices to suspend sending a new HARQ process within 10s. In the suspension period of 10s, all the first terminal devices suspend sending the new HARQ process. On the network device side, the network device may process an occupied resource node in the first HARQ resource pool, for example, send feedback information corresponding to a HARQ process, so that the first terminal device that receives the feedback information releases the corresponding HARQ process. Correspondingly, the occupied resource node may return to an idle state. As shown in FIG. 6, some occupied resource nodes in the first HARQ resource pool return to the idle state in the suspension period. In the suspension period, the UE 0 obtains information 3 and buffers the information 3. After the suspension ends, the UE0 sends the information 3 to the network device by using a HARQ process whose HARQ ID is 1 (referred to as a HARQ process 1 below). In this case, the HARQ process 1 occupies one resource node in the first HARQ resource pool.

Optionally, before S601, the HARQ process management method provided in this embodiment of this application may further include the following steps:
The network device sends first configuration information to the first terminal device, where the first configuration information is used to configure a GF resource in a first GF resource group for the first terminal device.

Specifically, the first configuration information may include any one of the following configuration information: a time-frequency position of the GF resource in the first GF resource group, a periodicity of the GF resource in the first GF resource group, a quantity K of repetitions (the quantity of repetitions is a quantity of times for repeatedly sending data packets with same content in one HARQ process) and redundancy versions of the repetitions, power control, a modulation and coding scheme, an antenna port, a quantity of HARQ processes (which may also be understood as a maximum quantity of HARQ IDs), and the like.

Optionally, a to-be-configured first terminal device (or the first terminal device that has not received the first configuration information) may be in an RRC active state (RRC Inactive state) or an RRC connected state (RRC Connected State).

Optionally, the first configuration information may be carried in RRC higher layer signaling (in this case, a CG configuration type may also be referred to as a type 1), or the first configuration information may be carried in DC, and the CG is configured in a DCI activation/deactivation manner (in this case, a CG configuration type may also be referred to as a type 2).

It may be understood that in the foregoing embodiments, the methods and/or steps implemented by the network device may alternatively be implemented by a component (for example, a chip or a circuit) that can be used in the network device. The methods and/or steps implemented by the terminal device may alternatively be implemented by a component (for example, a chip or a circuit) that can be used in the terminal device.

The foregoing mainly describes the solutions provided in embodiments of this application from the perspective of interaction between devices. Correspondingly, an embodiment of this application further provides a communication apparatus, and the communication apparatus is configured to implement the foregoing various methods. The communication apparatus may be the network device in the foregoing method embodiment, an apparatus including the foregoing network device, or a component that can be used in the network device. Alternatively, the communication apparatus may be the terminal device in the foregoing method embodiment, an apparatus including the foregoing terminal device, or a component that can be used in the terminal device. It may be understood that, to implement the foregoing functions, the communication apparatus includes corresponding hardware structures and/or software modules for performing the functions. A person skilled in the art should easily be aware that, in combination with units and algorithm steps of the examples described in embodiments disclosed in this specification, this application may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the communication apparatus may be divided into functional modules based on the foregoing method embodiment. For example, each functional module may be obtained through division based on each corresponding function, or two or more functions may be integrated into one processing module. The integrated module may be implemented in a form of hardware, or may be implemented in a form of a software functional module. It should be noted that, in embodiments of this application, module division is an example, and is merely a logic function division. In actual implementation, another division manner may be used.

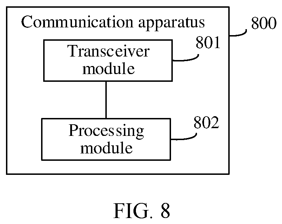

FIG. 8 is a diagram of a structure of a communication apparatus 800. The communication apparatus 800 includes a transceiver module 801 and a processing module 802. The transceiver module 801 may also be referred to as a transceiver module or a transceiver unit. The transceiver module 801 is configured to implement a transceiver function. For example, the transceiver module 801 may be a transceiver circuit, a transceiver machine, a transceiver, or a communication interface.

For example, the communication apparatus is the network device in the foregoing method embodiment. In a possible design, the processing module 802 is configured to determine, based on usage of a HARQ resource in a first HARQ resource pool, that first indication information needs to be sent, where the first HARQ resource pool corresponds to a first grant free GF resource group. The transceiver module 801 is configured to send the first indication information to a first terminal device, where the first indication information indicates to suspend sending a new HARQ process, and the first terminal device is a terminal device configured with at least one GF resource in the first GF resource group.

For example, the communication apparatus is the first terminal device in the foregoing method embodiment. In a possible design, the transceiver module 801 is configured to receive first indication information from a network device, where the first indication information indicates to suspend sending a new HARQ process. The processing module 802 is configured to suspend sending the new HARQ process based on the first indication information.

In this embodiment, the communication apparatus 800 is presented in a form in which functional modules are obtained through division in an integrated manner. The module herein may be an ASIC, a circuit, a processor that executes one or more software or firmware programs, a memory, an integrated logic circuit, and/or another component capable of providing the foregoing functions.

In a simple embodiment, a person skilled in the art may figure out that the communication apparatus 800 may be in a form of the communication apparatus 400 shown in FIG. 4.

For example, the processor 401 in the communication apparatus 400 shown in FIG. 4 may invoke the computer-executable instructions stored in the memory 403, to enable the communication apparatus 400 to perform the HARQ process management method in the foregoing method embodiment. Specifically, functions/implementation processes of the transceiver module 801 and the processing module 802 in FIG. 8 may be implemented by the processor 401 in the communication apparatus 400 shown in FIG. 4 by invoking the computer-executable instructions stored in the memory 403. Alternatively, a function/an implementation process of the processing module 802 in FIG. 8 may be implemented by the processor 401 in the communication apparatus 400 shown in FIG. 4 by invoking the computer-executable instructions stored in the memory 403. A function/an implementation process of the transceiver module 801 in FIG. 8 may be implemented by using the communication interface 404 in the communication apparatus 400 shown in FIG. 4.

The communication apparatus 800 provided in this embodiment may perform the foregoing HARQ process management method. Therefore, for technical effects that can be achieved by the communication apparatus 800, refer to the foregoing method embodiment. Details are not described herein again.

It should be noted that one or more of the foregoing modules or units may be implemented by using software, hardware, or a combination thereof. When any one of the foregoing modules or units is implemented by software, the software exists in a form of a computer program instruction, and is stored in the memory. The processor may be configured to execute the program instruction and implement the foregoing method procedure. The processor may be built into a SoC (system on a chip) or an ASIC, or may be an independent semiconductor chip. In addition to a core that is configured to execute software instructions to perform operation or processing, the processor may further include a necessary hardware accelerator, for example, a field programmable gate array (field programmable gate array, FPGA), a programmable logic device (programmable logic device, PLD), or a logic circuit that implements special logic operation.

When the foregoing modules or units are implemented through hardware, the hardware may be any one or any combination of a CPU, a microprocessor, a DSP chip, a microcontroller unit (microcontroller unit, MCU), an artificial intelligence processor, an ASIC, a SoC, an FPGA, a PLD, a dedicated digital circuit, a hardware accelerator, or a non-integrated discrete component, and the hardware may run necessary software or does not depend on software to perform the foregoing method procedure.

Optionally, an embodiment of this application further provides a chip system, including at least one processor and an interface, where the at least one processor is coupled to a memory through the interface, and when the at least one processor executes a computer program or instructions in the memory, the method according to any one of the foregoing method embodiments is performed. In a possible implementation, the communication apparatus further includes the memory. Optionally, the chip system may include a chip, or may include a chip and another discrete component. This is not specifically limited in this embodiment of this application.

All or some of the foregoing embodiments may be implemented by using software, hardware, firmware, or any combination thereof. When a software program is used to implement the foregoing embodiments, all or some of the foregoing embodiments may be implemented in a form of a computer program product.

This application provides a computer program product, including one or more computer instructions. When the computer instructions are run on a communication apparatus, any method in embodiments of this application is performed.

When the computer program instructions are loaded and executed on a computer, the procedure or functions according to embodiments of this application are all or partially generated. The computer may be a general-purpose computer, a dedicated computer, a computer network, or another programmable apparatus.

The computer instructions may be stored in a computer-readable storage medium. An embodiment of this application provides a computer-readable storage medium. The computer-readable storage medium stores instructions. When the instructions are run on a communication apparatus, any method in embodiments of this application is performed.

The computer instructions may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, for example, a server or a data center, integrating one or more usable media. The usable medium may be a magnetic medium (for example, a floppy disk, a hard disk drive, or a magnetic tape), an optical medium (for example, a digital versatile disc (digital versatile disc, DVD)), a semiconductor medium (for example, a solid-state drive (solid-state drive, SSD)), or the like.

Although this application is described with reference to embodiments, in a process of implementing this application that claims protection, a person skilled in the art may understand and implement another variation of the disclosed embodiments by viewing the accompanying drawings, disclosed content, and appended claims. In the claims, "comprising" (comprising) does not exclude another component or another step, and "a" or "one" does not exclude a case of multiple. A single processor or another unit may implement several functions enumerated in the claims. Some measures are recorded in dependent claims that are different from each other, but this does not mean that these measures cannot be combined to produce a better effect.

Although this application is described with reference to specific features and embodiments thereof, it is clear that various modifications and combinations may be made to them without departing from the protection scope of this application. Correspondingly, this specification and the accompanying drawings are merely example descriptions of this application defined by the appended claims, and are considered as any of or all modifications, variations, combinations or equivalents that cover the scope of this application. If these modifications and variations of this application fall within the scope of the claims of this application and equivalent technologies thereof, this application is also intended to cover these modifications and variations.

## Claims

1. A hybrid automatic repeat request HARQ process management method, wherein the method comprises:
determining, based on usage of a HARQ resource in a first HARQ resource pool, that first indication information needs to be sent, wherein the first HARQ resource pool corresponds to a first grant free GF resource group; and
sending the first indication information to a first terminal device, wherein the first indication information indicates to suspend sending a new HARQ process, and the first terminal device is a terminal device configured with at least one GF resource in the first GF resource group.

2. The method according to claim 1, wherein the first indication information comprises first duration, and the first duration is running duration of a first timer; and
that the first indication information indicates to suspend sending a new HARQ process comprises:
the first indication information indicates to suspend sending the new HARQ process during running of the first timer.

3. The method according to claim 2, wherein the first indication information further comprises second duration, and the second duration is a maximum value of random extended duration for suspending sending the new HARQ process after the first timer expires and before sending of the new HARQ process is restarted.

4. The method according to any one of claims 1 to 3, wherein the method further comprises:
sending second indication information to the first terminal device, wherein the second indication information indicates to resume sending the new HARQ process.

5. The method according to any one of claims 1 to 4, wherein the first indication information comprises an identity of the first terminal device or an identity of a group to which the first terminal device belongs.

6. The method according to any one of claims 1 to 5, wherein
the HARQ resource comprised in the first HARQ resource pool corresponds to a HARQ process whose identity information is a first identity.

7. The method according to claim 6, wherein the first indication information comprises the first identity, and the first identity indicates to suspend sending a new HARQ process whose identity information is the first identity.

8. The method according to any one of claims 1 to 7, wherein the first indication information is carried in a medium access control layer control element MAC CE or downlink control information DCI.

9. A HARQ process management method, wherein the method comprises:
receiving first indication information from a network device, wherein the first indication information indicates to suspend sending a new HARQ process; and
suspending sending the new HARQ process based on the first indication information.

10. The method according to claim 9, wherein the first indication information comprises first duration, and the first duration is running duration of a first timer; and
the suspending sending the new HARQ process based on the first indication information comprises:
suspending sending the new HARQ process during running of the first timer.

11. The method according to claim 10, wherein the first indication information further comprises second duration, and the second duration is a maximum value of random extended duration for suspending sending the new HARQ process after the first timer expires and before sending of the new HARQ process is restarted; and the method further comprises:
selecting, after the first timer expires, a grant free GF resource within first random extended duration to resend the new HARQ process, wherein the first random extended duration is less than or equal to the second duration.

12. The method according to any one of claims 9 to 11, wherein the method further comprises:
receiving the second indication information from the network device, wherein the second indication information indicates to resume sending the new HARQ process; and
resuming sending the new HARQ process based on the second indication information.

13. The method according to any one of claims 9 to 12, wherein the first indication information comprises an identity of the first terminal device or an identity of a group to which the first terminal device belongs.

14. The method according to any one of claims 9 to 13, wherein the first indication information comprises a first identity, and the first identity indicates to suspend sending a new HARQ process whose identity information is the first identity.

15. The method according to any one of claims 9 to 14, wherein the first indication information is carried in a medium access control layer control element MAC CE or downlink control information DCI.

16. A communication apparatus, comprising a module or a unit configured to implement the method according to any one of claims 1 to 8, or a module or a unit configured to implement the method according to any one of claims 9 to 15.

17. A communication apparatus, wherein the communication apparatus comprises a processor, the processor is coupled to a memory, the memory is configured to store computer-executable instructions, the processor is configured to execute the instructions stored in the memory, and when the instructions are run by the processor, the communication apparatus is enabled to perform the method according to any one of claims 1 to 8 or the method according to any one of claims 9 to 15.

18. A computer-readable storage medium, wherein the computer-readable storage medium stores a computer program, and when the computer program is executed by a computer, the method according to any one of claims 1 to 8 or the method according to any one of claims 9 to 15 is performed.

19. A computer program product, wherein when the computer program product is executed by a computer, the method according to any one of claims 9 to 15 or the method according to any one of claims 9 to 15 is performed.

20. A communication system, wherein the communication system comprises a network device and a first terminal device, the network device is configured to perform the method according to any one of claims 1 to 8, and the first terminal device is configured to perform the method according to any one of claims 9 to 15.
